# EUROPÄISCHE PATENTSCHRIFT

(11) **EP 2 204 762 B1**
(45) Veröffentlichungstag und Bekanntmachung des Hinweises auf die Patenterteilung: **21.02.2018**
(21) Anmeldenummer: 09178938.8
(22) Anmeldetag: 11.12.2009
(51) Int. Cl.: G06K 13/08

(54) **Karteneinzugsvorrichtung**
Card entering device
Dispositif d'introduction de carte

(30) Priorität: 12.12.2008 DE 102008061718
(43) Veröffentlichungstag der Anmeldung: 07.07.2010
(73) Patentinhaber: Continental Automotive GmbH, 30165 Hannover (DE)
(72) Erfinder: Wahler, Torsten, 78073 Bad Dürrheim (DE)

(56) Entgegenhaltungen:
- EP-A2- 0 794 499
- US-A1- 2006 283 955
- US-B1- 6 182 899

## Beschreibung

Die Erfindung bezieht sich auf eine Karteneinzugsvorrichtung, insbesondere für einen Fahrtschreiber eines Kraftfahrzeugs zum vollständigen Einzug einer Karte, insbesondere einer Chipkarte, auf der flächig ein Datenspeicher angeordnet ist, mit einem Transportschlitten, der einen Aufnahmespalt mit einer Einführöffnung zur Aufnahme der Karte aufweist, in den die Karte bis zur Anlage an einem Schlittenanschlag einführbar ist, wobei der Transportschlitten in einem Schacht eines ortsfesten Trägers geführt von einem Antrieb auf einem Transportweg zwischen einer Ausfahrposition und einer Einzugsposition translatorisch bewegbar antreibbar ist, mit einem feststehenden Kontaktsatz, an dem in der Einzugsposition des Transportschlittens der Datenspeicher der sich am Ende ihres Einzugswegs befindlichen Karte dadurch kontaktierend in Anlage gebracht ist, dass der Transportschlitten mit der Karte quer zu ihrer translatorischen Bewegung zum Kontaktsatz hin bewegbar ist.

EP0794499 A2 offenbart ein Datenerfassungsgerät mit einer verschiebbar gelagerte Schublade , in welcher zur Aufnahme von Datenkarten wenigstens eine Fassung ausgebildet ist.

Derartige digitale Fahrtschreiber verwenden als Karte eine Chipkarte, wobei bei in den Fahrtschreiber eingeführter Chipkarte ein Austausch von fahrer- und fahrzeugspezifischen Daten zwischen der Chipkarte und einer Lese- und Speichereinheit erfolgt.

Während der Aufzeichnung von Daten bei der Benutzung des Fahrzeugs darf die Chipkarte unter keinen Umständen von außen entnommen oder aus der Kartenaufnahmevorrichung ausgeworfen werden.

Dabei muss die Chipkarte vollständig eingeführt und verriegelt werden, und die Verriegelung muss absolut sicher gegen Manipulation sein.

Der zur Verfügung stehende Einbauraum für den Fahrtschreiber ist gering. Insbesondere darf die Karteneinzugsvorrichtung im Bereich der eingezogenen Karte nur eine limitierte Bauhöhe aufweisen.

Aufgabe der Erfindung ist es daher, eine Karteneinzugsvorrichtung der eingangs genannten Art zu schaffen, die bei einfachem Aufbau einen geringen Bauraum erfordert.

Diese Aufgabe wird erfindungsgemäß durch die Merkmale des unabhängigen Anspruch 1 gelöst.

Der Antrieb mittels einer Gewindespindel erfordert einen geringen Bauraum bei hoher Leistungsübertragungsfähigkeit.

Sind der Antrieb und die Gewindespindel auf der der Einführöffnung abgewandten Seite eines Bereichs angeordnet, in dem sich die Karte in ihrer Einzugsposition befindet, so ist im Bereich, in dem sich die Karte in ihrer Einzugsposition befindet kein Raum für den Antrieb erforderlich. Damit kann dieser Bereich problemlos auch dazu benutzt werden, dass eine den feststehenden Kontaktsatz tragende Leiterplatte mit elektrische und elektronische Bauteile aufweisenden Schaltkreisen versehen sein kann.

Ist die Gewindespindel über einen Schneckentrieb drehbar antreibbar, kann von dem Schneckentrieb bei geringer Baugröße eine hohe Leistung übertragen werden. Des Weiteren ist der Schneckentrieb selbsthemmend, so dass die Karte nicht durch Umwelt- und Manipulationseinflüsse in ihre Ausfahrposition gebracht werden kann, um dann die Karte unbefugt entnehmen zu können.

Zur weiteren Leistungssteigerung des Antriebs kann die Gewindespindel über eine Zwischenradstufe von dem Schneckentrieb drehbar antreibbar sein.

Dabei kann das gesamte Getriebe sehr kompakt und sehr flach ausgeführt werden.

Der Antrieb weist vorzugsweise einen motorischen, insbesondere einen elektromotorischen Drehantrieb auf.

Zur einfachen Inbetriebsetzung des Karteneinzugs kann die Karte bis zu einer Einsteckposition manuell in den Aufnahmespalt eingeführt sein und durch die in die Einführposition eingesteckte Karte ein Startsignal zum Starten des Antriebs in Einzugsrichtung auslösbar sein, wobei die Karte in der Einsteckposition an dem Schlittenanschlag des Transportschlittens in Anlage ist.

In einfacher Weise sind die Längskräfte der Spindel aufnehmbar, wenn die Gewindespindel an ihrem einen Endbereich eine radial umlaufende Ringnut aufweist, in die entsprechende Axiallageransätze eines ortsfesten Axiallagers hineinragen.

Dabei kann zur einfachen Steckmontage ohne das Erfordernis von zusätzlichen Befestigungselementen das Axiallager zwei quer zur Längsachse der Gewindespindel entgegen einer Federkraft voneinander weg auslenkbare Rastarme aufweisen, zwischen denen die Gewindespindel mit einem zylindrischen Bereich in einander gegenüberliegenden Lagerausnehmungen der Rastarme drehbar gelagert ist und an denen die Axiallageransätze einander zugewandt angeordnet sind.

Zum Axialantrieb des Transportschlittens kann die Spindelmutter einen Mitnehmer aufweisen, mittels dessen der Transportschlitten mit der Spindelmutter verbunden ist.

Dabei wird eine störungsfreie Bewegbarkeit der Spindelmutter erreicht, wenn die Spindelmutter an einer oder mehreren ortsfesten Führungen in Erstreckungsrichtung des Transportwegs des Transportschlittens verschiebbar geführt ist, wozu in einfacher Ausbildung die Spindelmutter an einander gegenüberliegenden Seiten Führungsnuten aufweisen kann, die sich in Erstreckungsrichtung des Transportwegs des Transportschlittens erstrecken und die voneinander weggerichtet sind und in die entsprechende ortsfeste Führungsbahnen eingreifen, die sich in Erstreckungsrichtung des Transportwegs des Transportschlittens erstrecken.

Eine einfache Entkopplung des Transportschlittens von dem Antrieb quer zur translatorischen Bewegung zum Kontaktsatz hin wird dadurch erreicht, dass der Transportschlitten an dem Mitnehmer quer zu seiner die Karte aufnehmenden Aufnahmefläche beweglich mit der Spindelmutter verbunden ist.

Dazu kann in einfacher, störungsfreier Ausbildung die Spindelmutter einen oder mehrere sich quer zur Aufnahmefläche des Transportschlittens hervorstehende Mitnehmerzapfen aufweisen, die in entsprechende Mitnahmeausnehmungen des Transportschlittens ragen.

Zur verkantungsvermeidenden translatorischen Bewegung bei gleichzeitiger dazu quer zum Kontaktsatz gerichteter Bewegung im Endbereich der Einzugsbewegung kann der Transportschlitten auf seinem Transportweg zwischen der Ausfahrposition und der Einzugsposition in ortsfesten Führungen geführt sein, die sich in ihrem einzugspositionsnäheren Endbereich aus einer dem Kontaktsatz ferneren Ebene in eine dem Kontaktsatz nahe Ebene erstrecken.

Dabei sind vorzugsweise die Führungen Führungsbahnen, auf denen der Transportschlitten mit Führungsansätzen aufliegt, wobei die Führungsbahnen aus der dem Kontaktsatz ferneren Ebene rampenartig in die dem Kontaktsatz nahe Ebene übergehen.

Zur Vermeidung einer unbefugten Entnahme der Karte kann der Träger einen Einführschlitz aufweisen, durch den die Karte zur Einführöffnung des Transportschlittens hindurchführbar ist und der bei in der Einzugsposition befindlichen Karte durch einen Verschluss verschließbar ist.

Ist dabei der Verschluss eine um eine zur Längserstreckung des Einführschlitzes parallele Schwenkachse reversierbar schwenkbar antreibbare Verschlussklappe, die insbesondere waagrecht über dem Einführschlitz liegt, so dient die Verschlussklappe sowohl zur Verriegelung der eingezogenen Karte gegen unbefugte Entnahme als auch als Verschluss des Einführschlitzes zur Vermeidung von Verschmutzungen.

Ein geringer Bauraumbedarf ist dabei erforderlich, wenn an dem Träger zumindest ein Schieber in Erstreckungsrichtung des Transportwegs bewegbar geführt ist, der mit dem Transportschlitten koppelbar ist und durch den die Verschlussklappe schwenkbar antreibbar ist.

Zum einfachen, störungsarmen Antrieb kann die Verschlussklappe einen Exzenter aufweisen, der von dem Schieber in Erstreckungsrichtung des Transportwegs beaufschlagbar ist, wozu in einfacher Ausbildung die Verschlussklappe an einem oder beiden axialen Enden einen Radialhebel aufweist, der einen zur Schwenkachse der Verschlussklappe parallelen Schwenkzapfen aufweist, der in ein sich quer zur Ebene des Aufnahmespalts des Transportschlittens erstreckendes Langloch des Schiebers eingreift.

Dazu kann der Schieber im Endbereich der Einzugsbewegung vor Erreichen der Einzugsposition sowie im Anfangsbereich und Endbereich der Ausschubbewegung des Transportschlittens mit dem Transportschlitten koppelbar sein, wozu der Transportschlitten sich quer zur Erstreckungsrichtung des Transportwegs hervorstehende Mitnehmer aufweisen kann, die an entsprechenden Anschlägen des Schiebers anschlagbar sind.

Zum Antrieb der Verschlussklappe in ihre Verschlussstellung sowie in ihre Öffnungs- bzw. Teilöffnungsstellung kann der Transportschlitten einen ersten Mitnehmer und einen zweiten Mitnehmer sowie der Schieber einen ersten Anschlag und einen zweiten Anschlag aufweisen, wobei die Mitnehmer zueinander und die Anschläge zueinander jeweils in Erstreckungsrichtung des Transportwegs in einem Abstand hervorstehend angeordnet sind, wobei im Endbereich der Einzugsbewegung der erste Mitnehmer an dem ersten Anschlag des Schiebers in Anlage und der zweite Mitnehmer vom zweiten Anschlag entkoppelt ist und wobei im Anfangsbereich der Ausschubbewegung des Transportschlittens der zweite Mitnehmer an einem zweiten Anschlag in Anlage und der erste Mitnehmer vom ersten Anschlag entkoppelt ist.

Zum Antrieb in seine Öffnungs- bzw. Teilöffnungsstellung kann der erste Mitnehmer zu Beginn des Endbereichs der Einzugsbewegung durch die Bewegung des Transportschlittens quer zu dessen translatorischer Bewegung zum Kontaktsatz hin aus dem Bereich des ersten Anschlags heraushebbar sein und der zweite Mitnehmer durch die Bewegung des Transportschlittens quer zu dessen translatorischer Bewegung vom Kontaktsatz weg zum Ende des Anfangsbereichs der Ausschubbewegung aus dem Bereich des zweiten Anschlags heraussenkbar sein.

Ein Antrieb der Verschlussklappe in ihre völlige Öffnungsstellung erfolgt in einfacher Weise dadurch, dass der Transportschlitten einen dritten Mitnehmer sowie der Schieber einen dritten Anschlag aufweist, wobei der dritte Mitnehmer im Endbereich der Ausschubbewegung des Transportschlittens an dem dritten Anschlag des Schiebers, diesen in Ausschubrichtung bis zur Ausfahrposition mitnehmend, anschlagbar ist.

Ragt ein feststehender Endanschlag in den Einzugsweg der Karte, an dem die Karte bei Erreichen der Endeinzugsposition mit ihrer in Einzugsrichtung vorderen Kante in Anlage kommt, wobei der Transportweg des Transportschlittens in Einzugsrichtung länger ist als der Einzugsweg der Karte, so gelangt auch bei ungenauem Aufliegen der Karte auf dem Transportschlitten die Karte immer in ihre bestimmungsgemäße Einzugsposition zu dem feststehenden Kontaktsatz.

Ein Ausführungsbeispiel der Erfindung ist in der Zeichnung dargestellt und wird im Folgenden näher beschrieben. Es zeigen:

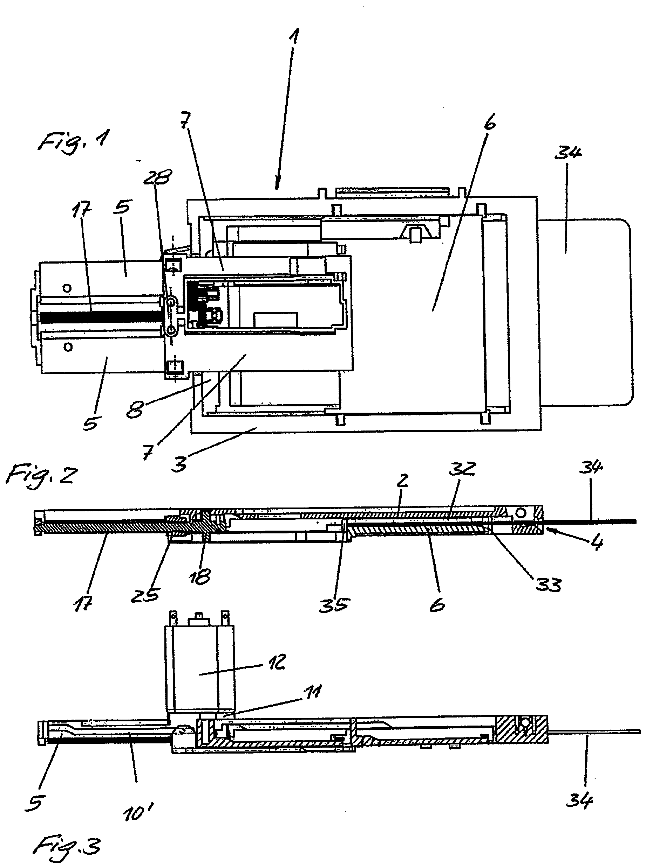

- Figur 1: eine Draufsicht einer Karteneinzugsvorrichtung mit eingesteckter Karte,
- Figur 2: einen mittigen Längsschnitt der Karteneinzugsvorrichtung nach Figur 1 mit eingesteckter Karte,
- Figur 3: einen Längsschnitt im Randbereich der Karteneinzugsvorrichtung nach Figur 1 mit eingesteckter Karte,

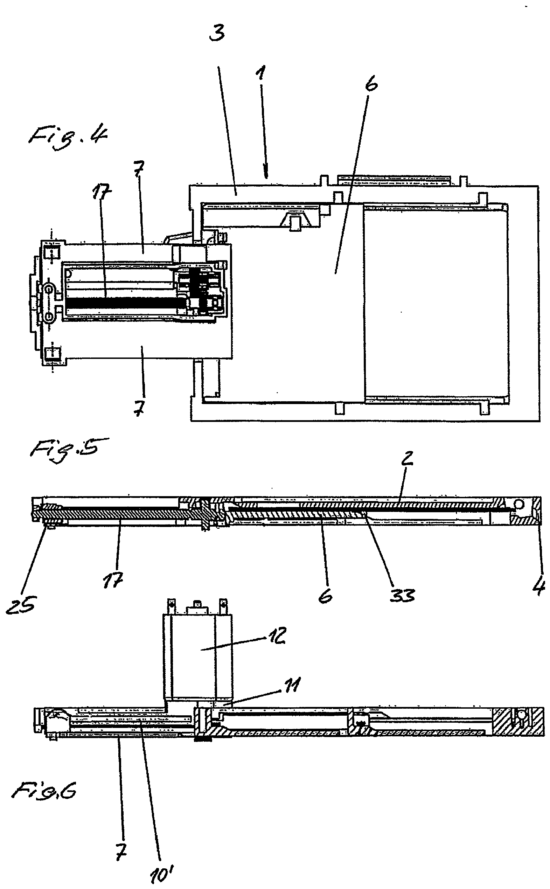

- Figur 4: eine Unteransicht der Karteneinzugsvorrichtung nach Figur 1 mit eingezogener Karte,
- Figur 5: einen mittigen Längsschnitt der Karteneinzugsvorrichtung nach Figur 4 mit eingezogener Karte,
- Figur 6: einen Längsschnitt im Randbereich der Karteneinzugsvorrichtung nach Figur 4 mit eingezogener Karte,

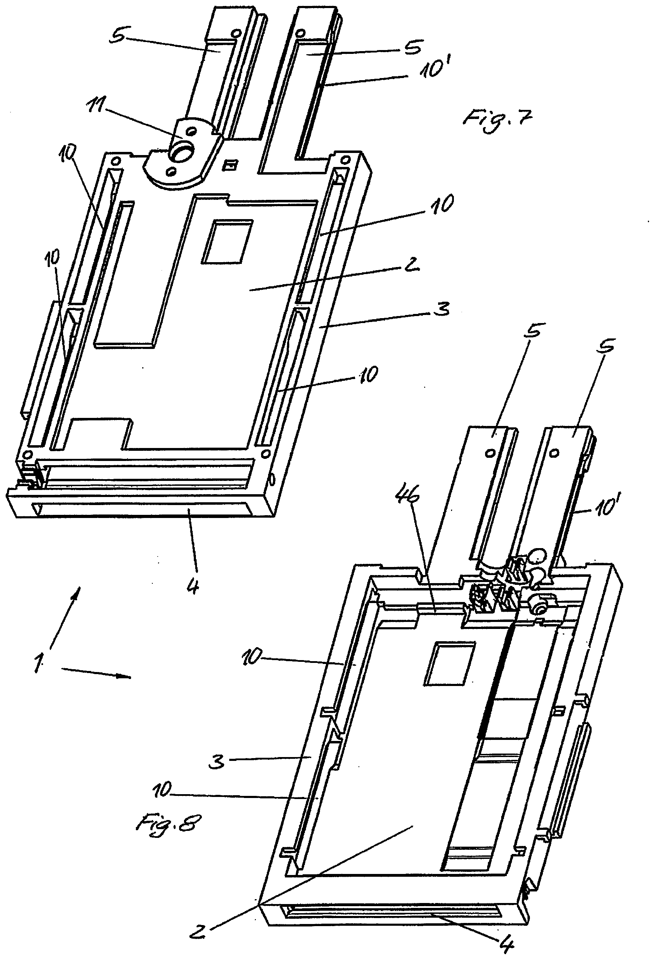

- Figur 7: eine perspektivische Draufsicht eines Trägers der Karteneinzugsvorrichtung nach Figur 1,
- Figur 8: eine perspektivische Unteransicht des Trägers nach Figur 7,

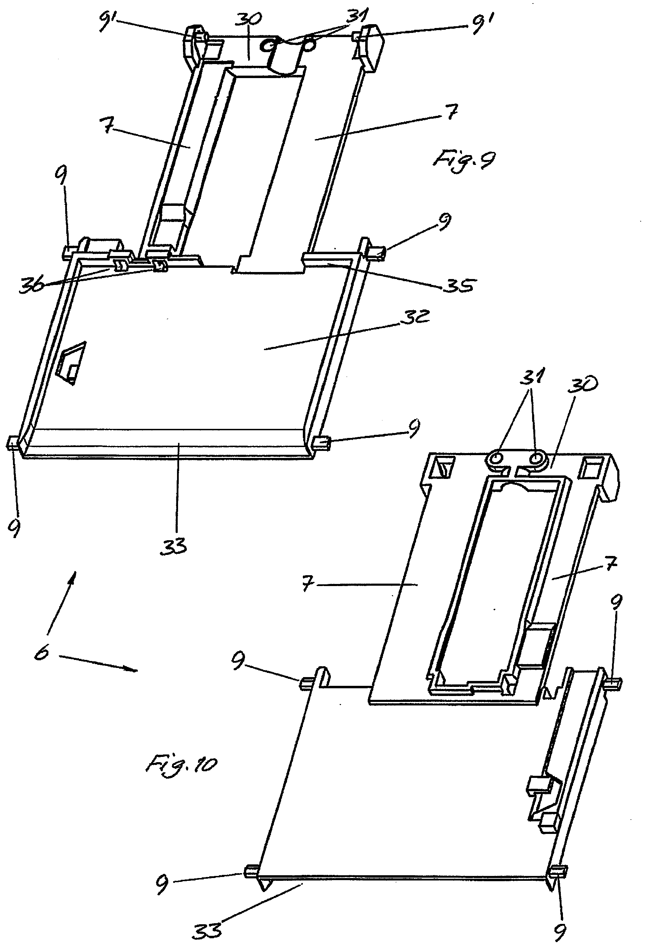

- Figur 9: eine perspektivische Draufsicht eines Transportschlittens der Karteneinzugsvorrichtung nach Figur 1,
- Figur 10: eine perspektivische Unteransicht des TransportSchlittens nach Figur 9,

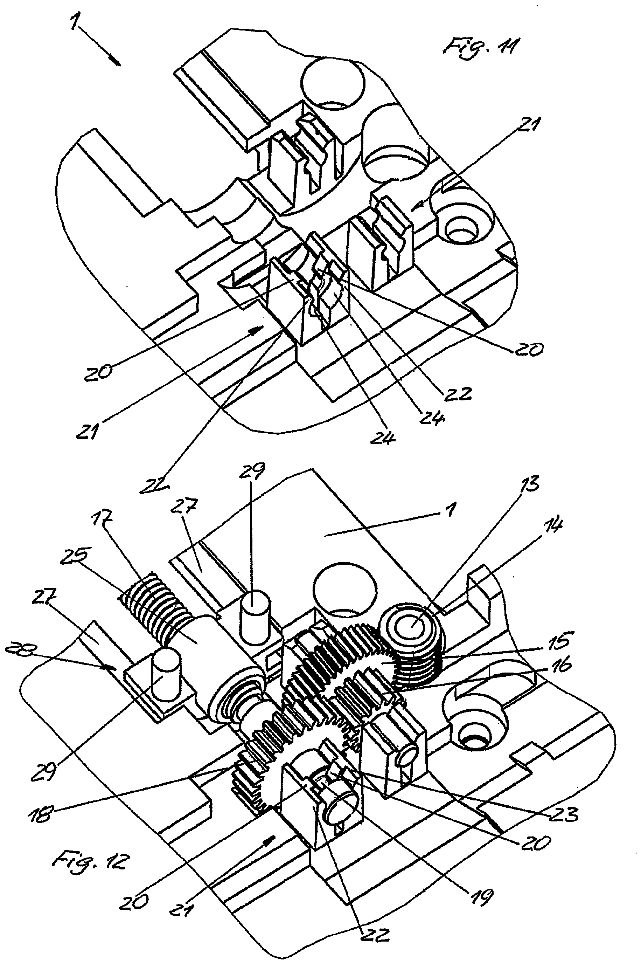

- Figur 11: einen vergrößerten Ausschnitt der Draufsicht des Trägers nach Figur 7,
- Figur 12: einen vergrößerten Ausschnitt der Draufsicht der Karteneinzugsvorrichtung nach Figur 1,

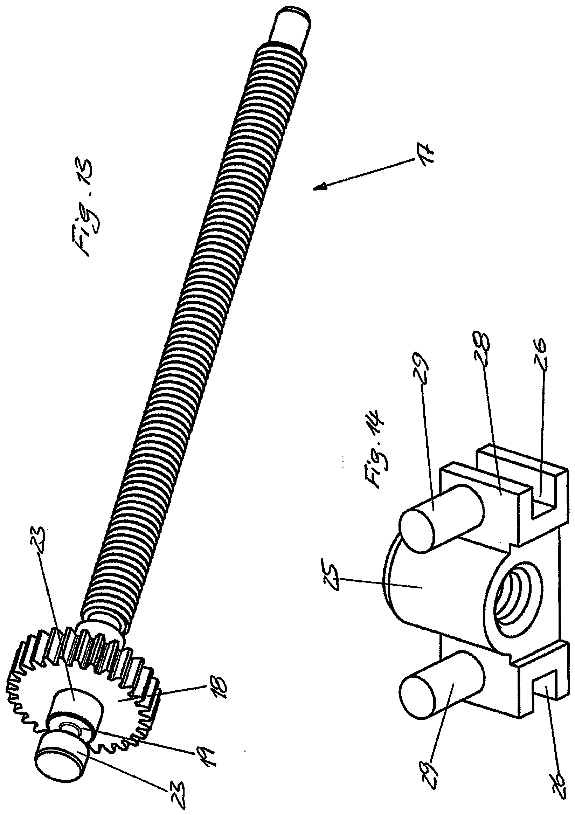

- Figur 13: eine perspektivische Ansicht einer Gewindespindel der Karteneinzugsvorrichtung nach Figur 1,
- Figur 14: eine perspektivische Ansicht einer Spindelmutter der Karteneinzugsvorrichtung nach Figur 1,
- Figur 15: eine Draufsicht der Karteneinzugsvorrichtung nach Figur 1 mit einem Verschluss mit noch nicht eingeführter Karte,
- Figur 15a: einen Längsschnitt entlang der Linie I - I in Figur 15,
- Figur 15b: einen Längsschnitt entlang der Linie II - II in Figur 15a,
- Figur 16: eine Draufsicht der Karteneinzugsvorrichtung nach Figur 1 mit einem Verschluss mit eingesteckter Karte,
- Figur 17: eine Draufsicht der Karteneinzugsvorrichtung nach Figur 1 mit einem Verschluss mit teileingezogener Karte in einer ersten Teileinzugsposition,
- Figur 17a: einen vergrößerten Ausschnitt eines Längsschnitts entlang der Linie II - II in Figur 17 entsprechend der ersten Teileinzugsposition,
- Figur 17b: eine perspektivische Unteransicht des Ausschnitts nach Figur 17a,
- Figur 18: eine Draufsicht der Karteneinzugsvorrichtung nach Figur 1 mit einem Verschluss mit teileingezogener Karte in einer zweiten Teileinzugsposition,
- Figur 18a: einen vergrößerten Ausschnitt eines Längsschnitts entlang der Linie II - II in Figur 18 entsprechend der zweiten Teileinzugsposition,
- Figur 18b: eine perspektivische Unteransicht des Ausschnitts nach Figur 18a,
- Figur 19: eine Draufsicht der Karteneinzugsvorrichtung nach Figur 1 mit einem Verschluss mit teileingezogener Karte in einer dritten Teileinzugsposition,
- Figur 19a: einen vergrößerten Ausschnitt eines Längsschnitts entlang der Linie II - II entsprechend der dritten Teileinzugsposition nach Figur 19,
- Figur 19b: eine perspektivische Unteransicht des Ausschnitts nach Figur 19a,
- Figur 20: eine Draufsicht der Karteneinzugsvorrichtung nach Figur 1 mit einem Verschluss mit eingezogener Karte,
- Figur 20a: einen vergrößerten Ausschnitt eines Längsschnitts entlang der Linie II - II in Figur 20 entsprechend der Einzugsposition,
- Figur 20b: eine perspektivische Unteransicht des Ausschnitts nach Figur 20a,
- Figur 21: eine Draufsicht der Karteneinzugsvorrichtung nach Figur 1 mit einem Verschluss in einer ersten Teilausfahrposition der Karte,
- Figur 21a: einen vergrößerten Ausschnitt eines Längsschnitts entlang der Linie II - II in Figur 21 entsprechend der ersten Teilausfahrposition der Karte
- Figur 21b: eine perspektivische Unteransicht des Ausschnitts nach Figur 21a,
- Figur 22: eine Draufsicht der Karteneinzugsvorrichtung nach Figur 1 mit einem Verschluss in der Ausfahrposition,
- Figur 23: eine perspektivische Draufsicht auf einen Schieber der Karteneinzugsvorrichtung nach Figur 1,

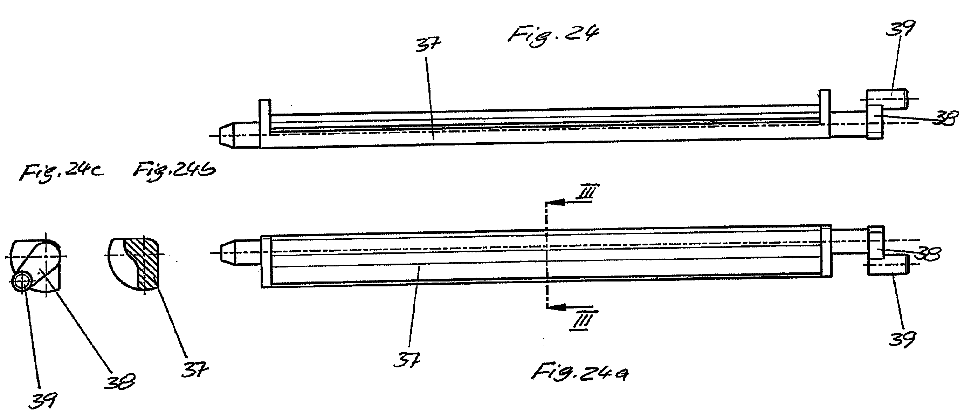

- Figur 24: eine Seitenansicht einer Verschlussklappe der Karteneinzugsvorrichtung nach Figur 1,
- Figur 24a: eine Seitenansicht der Verschlussklappe nach Figur 24,
- Figur 24b: einen Querschnitt entlang der Linie III - III in Figur 24a,
- Figur 24c: eine Stirnansicht der Verschlussklappe nach Figur 24a.

Die dargestellte Karteneinzugsvorrichtung weist einen Träger 1 mit einer rechteckigen Trägerplatte 2 auf. Der umlaufende Rand der Trägerplatte 2 ist mit einem von der Ebene der Trägerplatte 2 hervorstehenden Rahmen 3 versehen.

In der einen kurzen Stirnseite des Rahmens 3 ist ein Einführschlitz 4 ausgebildet.

Auf der der Seite des Einführschlitzes 4 abgewandten Seite ist der Träger 1 mit zwei in einem Abstand zueinander parallelen Führungselementen 5 versehen, die sich rechtwinklig von der Trägerplatte 2 wegerstrecken.

Innerhalb des Rahmens ist ein Transportschlitten 6 in Längserstreckungsrichtung der Trägerplatte 2 zwischen einer dem Einführschlitz 4 nahen Ausfahrposition und einer dem Einführschlitz 4 fernen Einzugsposition verschiebbar geführt.

Der Transportschlitten 6 weist weiterhin Führungsarme 7 auf, die sich durch Ausnehmungen 8 des Rahmens 3 an der dem Einführschlitz 4 abgewandten Seite hindurch erstrecken.

Der Transportschlitten 6 besitzt an seinem in dem Rahmen 3 befindlichen Bereich an den Enden seiner sich in Bewegungsrichtung des Transportschlittens 6 erstreckenden Seiten hervorstehende Führungsansätze 9, die jeweils in eine kulissenartige Führungsbahn 10 hineinragen, welche in den Längsseiten des Rahmens 3 ausgebildet sind.

Damit befinden sich in jeder Längsseite des Rahmens 3 zwei hintereinander angeordnete Führungsbahnen 10.

In ihren dem Einführschlitz 4 entfernten Endbereichen gehen die Führungsbahnen 10 aus einer der Trägerplatte 2 näheren Ebene rampenartig in eine der Trägerplatte 2 entferntere Ebene über.

In den einander weggerichteten Seiten der Führungselemente 5 sind ebenfalls nutartige, sich in Bewegungsrichtung des Transportschlittens 6 erstreckende Führungsbahnen 10' ausgebildet, in die einander zugewandte Führungsansätze 9 hineinragen.

Auch die Führungsbahnen 10' gehen an ihren dem Einführschlitz 4 entfernten Endbereichen aus einer der Trägerplatte 2 näheren Ebene in eine der Trägerplatte 2 entferntere Ebene über.

Damit wird der Transportschlitten 6 bei einer Verschiebung aus seiner Ausfahrposition in seine Einzugsposition in dem der Einzugsposition nahen Endbereich dieses Transportwegs aus der der Trägerplatte 2 näheren Ebene in die der Trägerplatte 2 entferntere Ebene bewegt.

Zur Durchführung dieser Bewegung des Transportschlittens 6 zwischen der Ausfahrposition und der Einzugsposition ist auf einer Motoraufnahme 11 des Trägers 1 ein Elektromotor 12 befestigt, auf dessen sich quer zur Ebene der Trägerplatte 2 erstreckender Motorwelle 13 ein Schneckentrieb 14 angeordnet ist.

Der Schneckentrieb 14 greift in ein Zwischenrad 15 ein, das um eine sich in Richtung des Transportwegs des Transportschlittens 6 erstreckende Achse drehbar am Träger 1 gelagert ist.

Ein Ritzel 16 des Zwischenrades 15 greift wiederum in ein fest auf einem Endbereich einer Gewindespindel 17 sitzendes Zahnrad 18 ein.

Das freie Ende dieses Endbereichs ist mit einer radial umlaufenden Ringnut 19 versehen, in die Axiallageransätze 20 eines auf dem Träger 1 fest angeordneten Axiallagers 21 hineinragen.

Das Axiallager 21 weist zwei quer zur Längsachse der Gewindespindel 17 entgegen einer Federkraft voneinander weg auslenkbare Rastarme 22 auf, zwischen denen die Gewindespindel 17 mit einem zylindrischen Bereich 23 in einander gegenüberliegende Lagerausnehmungen 24 der Rastarme 22 drehbar gelagert ist.

An den Rastarmen 22 einander zugewandt sind auch die Axiallageransätze 20 angeordnet.

Die Gewindespindel 17 erstreckt sich zwischen den Führungselementen 5 und der Trägerplatte 2 weg.

Auf der Gewindespindel 17 ist eine Spindelmutter 25 angeordnet, die an einander gegenüberliegenden Seiten sich in Richtung des Transportwegs erstreckende Führungsnuten 26 aufweist, in die die einander zugewandten Seiten der Führungselemente 5 hineinragen und Führungsbahnen 27 bilden.

Die Spindelmutter 15 weist einen Mitnehmer 28 auf, der zwei zur Längsachse der Gewindespindel 7 nebeneinander angeordnete Mitnehmerzapfen 29 besitzt, die senkrecht zur Ebene der Trägerplatte 2 hervorstehen.

Die freien Enden der Führungsarme 7 des Transportschlittens 6 sind durch einen Steg 30 miteinander verbunden, in dem entsprechend der Mitnehmerzapfen 29 Mitnahmeausnehmungen 31 ausgebildet sind, in die die Mitnehmerzapfen 29 verschiebbar geführt hineinragen.

Bei Antrieb der Gewindespindel 17 wird somit über den Mitnehmer 28 der Spindelmutter 25 der Transportschlitten 6 in seinen Führungen bewegt, wobei bei der Änderung der Bewegungsebene des Transportschlittens 6 ein Verschieben des Stegs 30 auf den Mitnehmerzapfen 29 erfolgt.

Der Transportschlitten 6 weist einen Aufnahmespalt 32 mit einer Einführöffnung 33 auf, die dem Einführschlitz 4 in gleicher Ebene gegenüberliegt.

Durch den Einführschlitz 4 und die Einführöffnung 33 des sich in der Ausfahrposition befindlichen Transportschlittens 6 kann eine Chipkarte 34 bis zu einer Einsteckposition in den Aufnahmespalt 32 eingeführt werden.

Bei Erreichen der Einsteckposition gelangt die in Einsteckrichtung vordere Kante der Chipkarte 34 zur Anlage an einen Schlittenanschlag 35 des Transportschlittens 6 und an Schalter 36, durch deren Betätigung ein Startsignal zum Starten des Elektromotors 12 und der Gewindespindel 17 in Einzugsrichtung ausgelöst wird.

Um eine zur Längserstreckung des Einführschlitzes 4 parallele Schwenkachse ist über dem Einführschlitz 4 eine Verschlussklappe 37 zwischen einer Offenstellung und einer Verschlussstellung reversierbar schwenkbar antreibbar gelagert.

Die Verschlussklappe 37 weist an einem Ende einen Radialhebel 38 auf, der an seinem freien Ende einen zur Schwenkachse der Verschlussklappe 37 parallelen Schwenkzapfen 39 aufweist.

Der Schwenkzapfen 39 greift in ein sich quer zur Ebene des Aufnahmespalts 32 erstreckendes Langloch 40 eines Schiebers 41 ein.

Der Schieber 41 ist an der einen längeren Seite des Rahmens 3 in Erstreckungsrichtung des Transportweges verschiebbar geführt.

Durch diese Verschiebebewegung des Schiebers 41 ist die Verschlussklappe 37 schwenkbar antreibbar.

Der Transportschlitten 6 weist einen ersten Mitnehmer 42 und einen zweiten Mitnehmer 43 auf, die in Erstreckungsrichtung des Transportwegs in einem Abstand zueinander hervorstehend angeordnet sind.

Der Schieber 41 weist einen ersten Anschlag 44 und einen zweiten Anschlag 45 auf, die ebenfalls in Erstreckungsrichtung des Transportwegs in einem Abstand zueinander hervorstehend angeordnet sind.

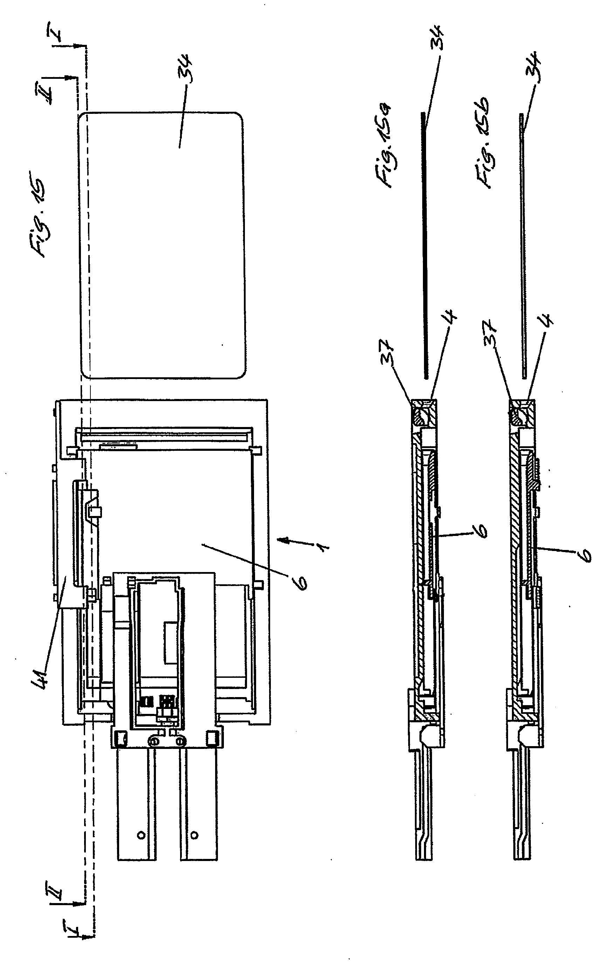

Bei noch nicht eingeführter Chipkarte 34 befindet sich der Transportschlitten 6 in seiner Ausfahrposition (Figuren 15 bis 15b).

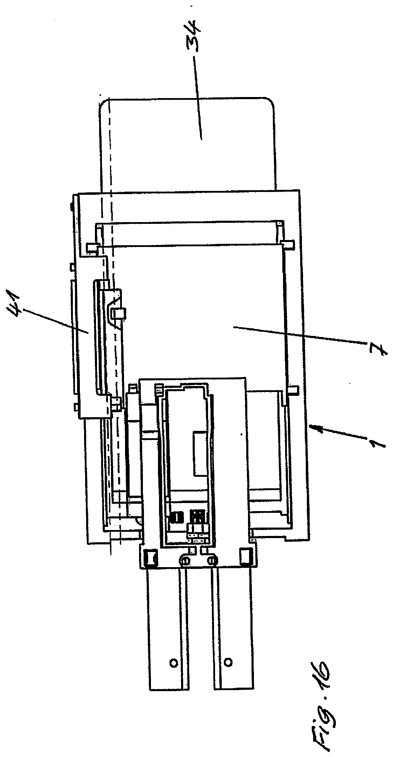

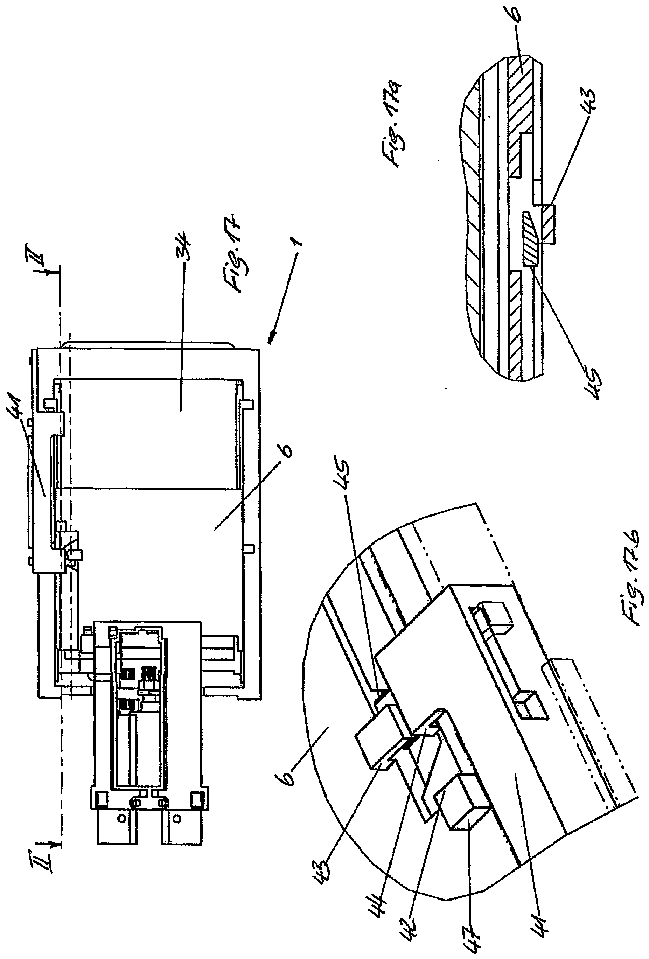

Ist die Chipkarte 34 bis zum Schlittenanschlag 35 eingesteckt, so wird der Transportschlitten 6 eingefahren (Figuren 16, 17 bis 17b).

Da der zweite Anschlag 45 sich in einer anderen Ebene befindet als der erste Mitnehmer 42, bewegt es sich an dem ersten Mitnehmer 42 vorbei.

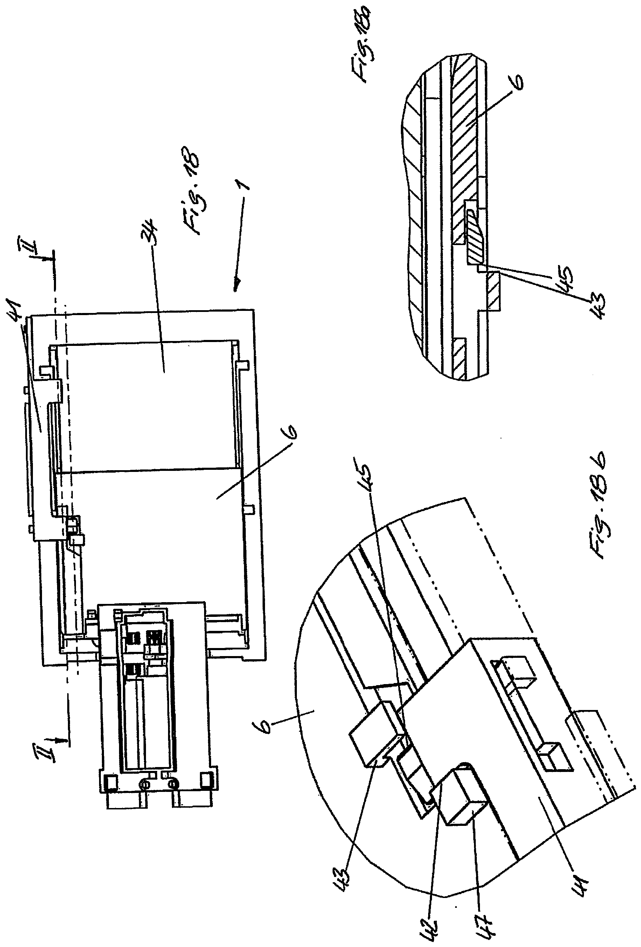

Erst wenn der erste Anschlag 44 zur Anlage an dem ersten Mitnehmer 42 gelangt (Figuren 18 - 18b), wird der Schieber 41 in Einzugsrichtung bis in seine Endposition mitgenommen.

In dieser Phase wird auch der Transportschlitten 6 aus seiner der Trägerplatte 2 näheren Ebene in die der Trägerplatte 2 entferntere Ebene bewegt, wobei der erste Anschlag 44 außer Eingriff von dem ersten Mitnehmer 42 gelangt.

Von dem Transportschlitten 6 wird noch ein kurzer Überhub weiter durchgeführt, um dann die Einzugsposition zu erreichen.

Dabei gelangt die Chipkarte 34 mit ihrer Vorderkante an einem feststehenden Endanschlag 46 zur Anlage, so dass der Transportschlitten 6 um ein geringes Maß unter der Chipkarte 34 weiterfährt.

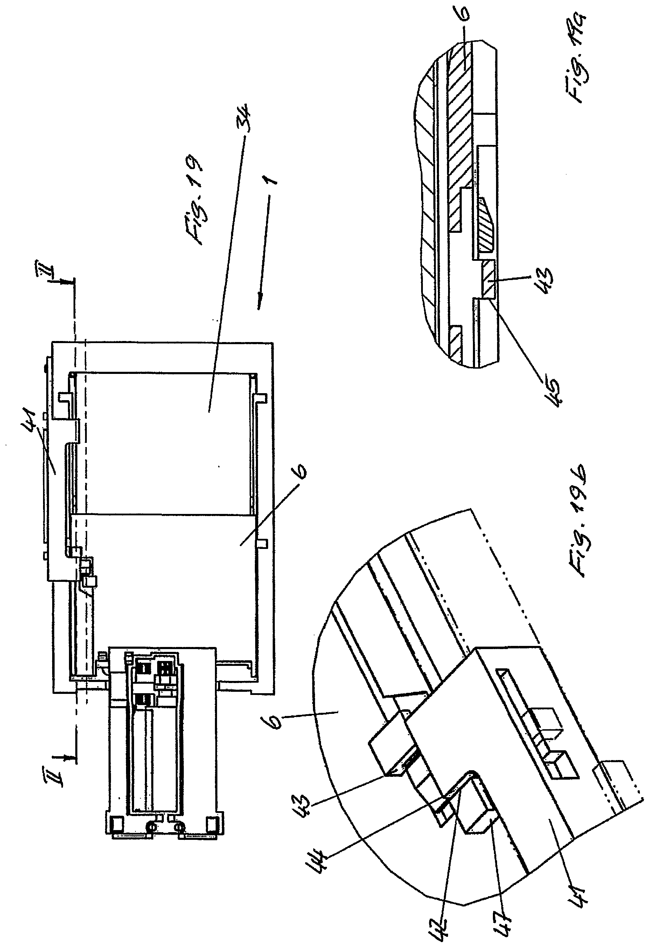

Durch den Endanschlag 46 ist die Chipkarte 34 so positioniert, dass ein nicht dargestellter, auf der Chipkarte 34 angeordneter Datenspeicher exakt zu einem auf einer nicht dargestellten Leiterplatte am Träger 1 fest angeordneten Kontaktsatz ausgerichtet ist und mit diesem kontaktiert (Figuren 19 bis 19b).

Bei dieser Bewegung wird durch den Schieber 41 auch die Verschlussklappe 37 in ihrer Verschlussstellung geschwenkt, wobei sie dabei die Chipkarte 34 noch völlig in den Aufnahmespalt 32 hineinschieben kann, wenn dies noch nicht der Fall sein sollte.

Bei Erreichen der Einzugsposition wird der Einzugsantrieb abgeschaltet.

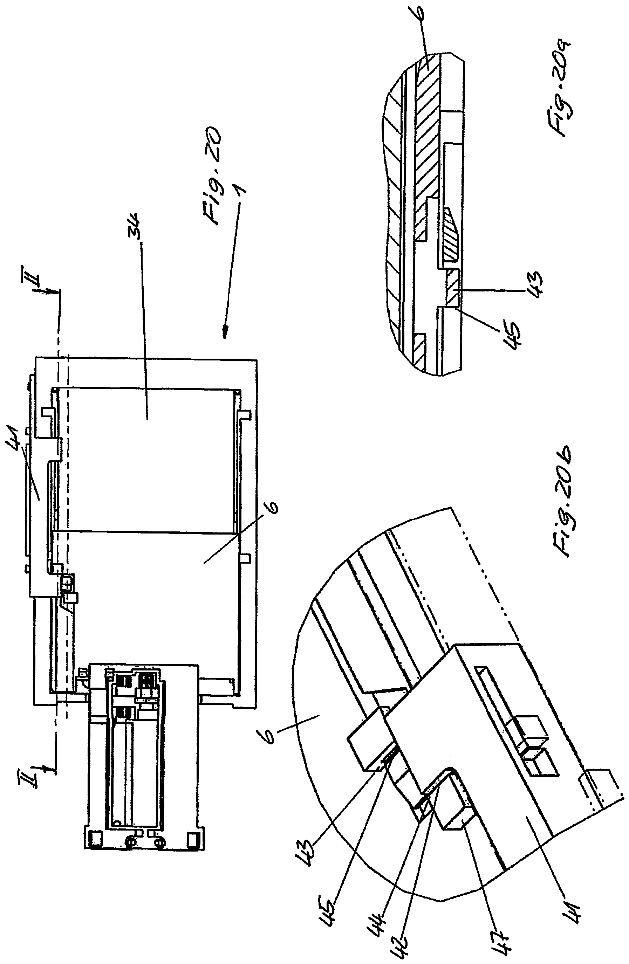

Bei dem Bewegen des Transportschlittens 6 in die der Trägerplatte 2 entferntere Ebene wird auch der zweite Mitnehmer 43 in die Ebene bewegt, in der sich der zweite Anschlag 45 befindet (Figuren 20 bis 20b).

Soll nun die Chipkarte 34 wieder ausgeworfen werden, wird der Einzugsantrieb in die entgegengesetzte Richtung in Betrieb gesetzt und der Transportschlitten 6 in Ausfahrrichtung bewegt.

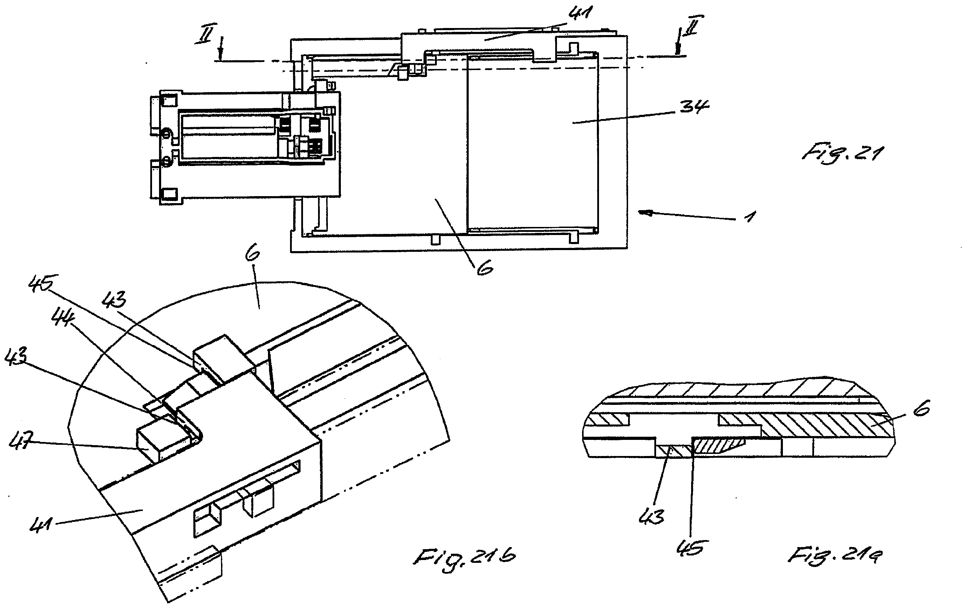

Dabei schlägt der zweite Mitnehmer 43 am zweiten Anschlag 45 an und nimmt dabei den Schieber 41 solange mit, bis er durch das Zurückbewegen des Transportschlittens 6 in seine der Trägerplatte 2 nähere Ebene wieder außer Eingriff vom zweiten Anschlag 45 gelangt (Figuren 21 bis 21b).

Dabei wird auch die Verschlussklappe 37 soweit in Öffnungsrichtung geschwenkt, dass die Chipkarte 34 nach außen geschoben werden kann.

Der Transportschlitten 6 bewegt sich nun ohne Mitnahme des Schiebers 41 zur Ausfuhrposition hin, bis im Endbereich diese Ausschubbewegung ein dritter Mitnehmer 47 des Transportschlittens 6 an einem dritten Anschlag des Schiebers 41 zur Anlage kommt und den Schieber 41 in Ausschubrichtung bis zum Erreichen der Ausfuhrposition mitnimmt, in der dann der Antrieb ausgeschaltet wird.

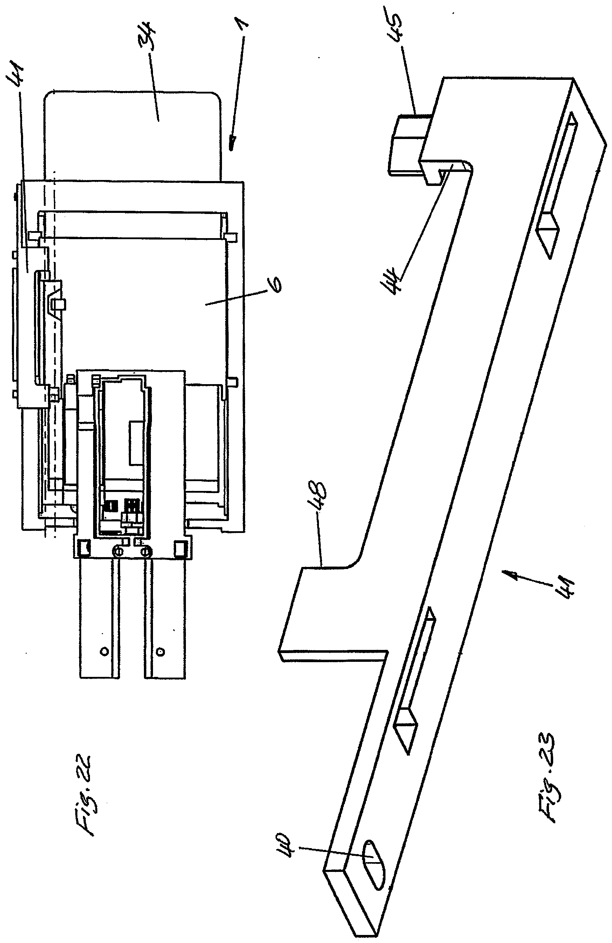

Durch diese Mitnahme des Schiebers 41 wird von diesem dann die Verschlussklappe 37 in ihre völlige Offenstellung geschwenkt (Figur 22).

Nun kann die teilweise nach außen ragende Chipkarte 34 manuell aus der Karteneinzugsvorrichtung herausgezogen werden.

## Patentansprüche

1. Karteneinzugsvorrichtung, insbesondere für einen Fahrtschreiber eines Kraftfahrzeugs zum vollständigen Einzug einer Karte, insbesondere einer Chipkarte, auf der flächig ein Datenspeicher angeordnet ist, mit einem Transportschlitten, der einen Aufnahmespalt mit einer Einführöffnung zur Aufnahme der Karte aufweist, in den die Karte bis zur Anlage an einem Schlittenanschlag einführbar ist, wobei der Transportschlitten in einem Schacht eines ortsfesten Trägers geführt von einem Antrieb auf einem Transportweg zwischen einer Ausfahrposition und einer Einzugsposition translatorisch bewegbar antreibbar ist, mit einem feststehenden Kontaktsatz, an dem in der Einzugsposition des Transportschlittens der Datenspeicher der sich am Ende ihres Einzugswegs befindlichen Karte dadurch kontaktierend in Anlage gebracht ist, dass der Transportschlitten mit der Karte quer zu ihrer translatorischen Bewegung zum Kontaktsatz hin bewegbar ist, **dadurch gekennzeichnet , dass** der Antrieb eine reversibel drehbar antreibbare, ortsfest gelagerte Gewindespindel (17) aufweist, die sich in Erstreckungsrichtung des Transportwegs des Transportschlittens (6) erstreckt und auf der eine mit dem Transportschlitten (6) verbundene Spindelmutter (25) angeordnet ist.

2. Karteneinzugsvorrichtung nach Anspruch 1, **dadurch gekennzeichnet, dass** der Antrieb und die Gewindespindel (17) auf der der Einführöffnung (33) abgewandten Seite eines Bereichs angeordnet sind, in dem sich die Karte in ihrer Einzugsposition befindet.

3. Karteneinzugsvorrichtung nach einem der vorhergehenden Ansprüche, **dadurch gekennzeichnet, dass** die Gewindespindel (17) über einen Schneckentrieb (14) drehbar antreibbar ist.

4. Karteneinzugsvorrichtung nach Anspruch 3, **dadurch gekennzeichnet, dass** die Gewindespindel (17) über eine Zwischenradstufe (15) von dem Schneckentrieb (14) drehbar antreibbar ist.

5. Karteneinzugsvorrichtung nach einem der vorhergehenden Ansprüche, **dadurch gekennzeichnet, dass** der Antrieb einen motorischen, insbesondere einen elektromotorischen Drehantrieb aufweist.

6. Karteneinzugsvorrichtung nach einem der vorhergehenden Ansprüche, **dadurch gekennzeichnet, dass** die Karte bis zu einer Einsteckposition manuell in den Aufnahmespalt (32) einführbar ist und durch die in die Einführposition eingesteckte Karte ein Startsignal zum Starten des Antriebs in Einzugsrichtung auslösbar ist.

7. Karteneinzugsvorrichtung nach einem der vorhergehenden Ansprüche, **dadurch gekennzeichnet , dass** die Gewindespindel (17) an ihrem einen Endbereich eine radial umlaufende Ringnut (19) aufweist, in die entsprechende Axiallageransätze (20) eines ortsfesten Axiallagers (21) hineinragen.

8. Karteneinzugsvorrichtung nach Anspruch 7, **dadurch gekennzeichnet, dass** das Axiallager (21) zwei quer zur Längsachse der Gewindespindel (17) entgegen einer Federkraft voneinander weg auslenkbare Rastarme (22) aufweist, zwischen denen die Gewindespindel (17) mit einem zylindrischen Bereich (23) in einander gegenüberliegenden Lagerausnehmungen (24) der Rastarme (22) drehbar gelagert ist und an denen die Axiallageransätze (20) einander zugewandt angeordnet sind.

9. Karteneinzugsvorrichtung nach einem der vorhergehenden Ansprüche, **dadurch gekennzeichnet, dass** die Spindelmutter (25) einen Mitnehmer (28) aufweist, mittels dessen der Transportschlitten (6) mit der Spindelmutter (25) verbunden ist.

10. Karteneinzugsvorrichtung nach Anspruch 9, **dadurch gekennzeichnet, dass** die Spindelmutter (25) an einer oder mehreren ortsfesten Führungen in Erstreckungsrichtung des Transportwegs des Transportschlittens (6) verschiebbar geführt ist.

11. Karteneinzugsvorrichtung nach Anspruch 10, **dadurch gekennzeichnet, dass** die Spindelmutter (25) an einander gegenüberliegenden Seiten Führungsnuten (26) aufweist, die sich in Erstreckungsrichtung des Transportwegs des Transportschlittens (6) erstrecken und die voneinander weggerichtet sind und in die entsprechende ortsfeste Führungsbahnen (27) eingreifen, die sich in Erstreckungsrichtung des Transportwegs des Transportschlittens (6) erstrecken.

12. Karteneinzugsvorrichtung nach einem der Ansprüche 9 bis 11, **dadurc**h **gekennzeichnet**, dass der Transportschlitten (6) an dem Mitnehmer (28) quer zu seiner die Karte aufnehmenden Aufnahmefläche beweglich mit der Spindelmutter (25) verbunden ist.

13. Karteneinzugsvorrichtung nach Anspruch 12, **dadurch gekennzeichnet, dass** die Spindelmutter (25) einen oder mehrere sich quer zur Aufnahmefläche des Transportschlittens (6) hervorstehende Mitnehmerzapfen (29) aufweist, die in entsprechende Mitnahmeausnehmungen (31) des Transportschlittens (6) ragen.

14. Karteneinzugsvorrichtung nach einem der Ansprüche 12 und 13, **dadurc**h **gekennzeichnet**, dass der Transportschlitten (6) auf seinem Transportweg zwischen der Ausfahrposition und der Einzugsposition in ortsfesten Führungen geführt ist, die sich in ihrem einzugspositionsnäheren Endbereich aus einer dem Kontaktsatz ferneren Ebene in eine dem Kontaktsatz nahe Ebene erstrecken.

15. Karteneinzugsvorrichtung nach Anspruch 14, **dadurch gekennzeichnet, dass** die Führungen Führungsbahnen (10, 10') sind, auf denen der Transportschlitten (6) mit Führungsansätzen (9, 9') aufliegt.

16. Karteneinzugsvorrichtung nach Anspruch 15, **dadurch gekennzeichnet, dass** die Führungsbahnen (10, 10') aus der dem Kontaktsatz ferneren Ebene rampenartig in die dem Kontaktsatz nahe Ebene übergehen.

17. Karteneinzugsvorrichtung nach einem der vorhergehenden Ansprüche, **dadurch gekennzeichnet, dass** der Träger (1) einen Einführschlitz (4) aufweist, durch den die Karte zur Einführöffnung (33) des Transportschlittens (6) hindurchführbar ist und der bei in der Einzugsposition befindlichen Karte durch einen Verschluss verschließbar ist.

18. Karteneinzugsvorrichtung nach Anspruch 17, **dadurch gekennzeichnet, dass** der Verschluss eine um eine zur Längserstreckung des Einführschlitzes (4) parallele Schwenkachse reversierbar schwenkbar antreibbare Verschlussklappe (37) ist.

19. Karteneinzugsvorrichtung nach Anspruch 18, **dadurch gekennzeichnet, dass** an dem Träger (1) zumindest ein Schieber (41) in Erstreckungsrichtung des Transportwegs bewegbar geführt ist, der mit dem Transportschlitten (6) koppelbar ist und durch den die Verschlussklappe (37) schwenkbar antreibbar ist.

20. Karteneinzugsvorrichtung nach Anspruch 19, **dadurch gekennzeichnet, dass** die Verschlussklappe (37) einen Exzenter aufweist, der von dem Schieber (41) in Erstreckungsrichtung des Transportwegs beaufschlagbar ist.

21. Karteneinzugsvorrichtung nach Anspruch 20, **dadurch gekennzeichnet, dass** die Verschlussklappe (37) an einem oder beiden axialen Enden einen Radialhebel (38) aufweist, der einen zur Schwenkachse der Verschlussklappe (37) parallelen Schwenkzapfen (39) aufweist, der in ein sich quer zur Ebene des Aufnahmespalts (32) des Transportschlittens (6) erstreckendes Langloch (40) des Schiebers (41) eingreift.

22. Karteneinzugsvorrichtung nach einem der Ansprüche 19 bis 21, **dadurch gekennzeichnet, dass** der Schieber (41) im Endbereich der Einzugsbewegung vor Erreichen der Einzugsposition sowie im Anfangsbereich und Endbereich der Ausschubbewegung des Transportschlittens (6) mit dem Transportschlitten (6) koppelbar ist.

23. Karteneinzugsvorrichtung nach Anspruch 22, **dadurch gekennzeichnet, dass** der Transportschlitten (6) sich quer zur Erstreckungsrichtung des Transportwegs hervorstehende Mitnehmer (43) aufweist, die an entsprechenden Anschlägen (44, 45) des Schiebers (41) anschlagbar sind.

24. Karteneinzugsvorrichtung nach Anspruch 23, **dadurch gekennzeichnet, dass** der Transportschlitten (6) einen ersten Mitnehmer (42) und einen zweiten Mitnehmer (43) sowie der Schieber (41) einen ersten Anschlag (44) und einen zweiten Anschlag (45) aufweist, wobei die Mitnehmer (42, 43) zueinander und die Anschläge (44, 45) zueinander jeweils in Erstreckungsrichtung des Transportwegs in einem Abstand hervorstehend angeordnet sind, wobei im Endbereich der Einzugsbewegung der erste Mitnehmer (42) an dem ersten Anschlag (44) des Schiebers (41) in Anlage und der zweite Mitnehmer (43) vom zweiten Anschlag (45) entkoppelt ist und wobei im Anfangsbereich der Ausschubbewegung des Transportschlittens (6) der zweite Mitnehmer (43) an einem zweiten Anschlag (45) in Anlage und der erste Mitnehmer (42) vom ersten Anschlag (44) entkoppelt ist.

25. Karteneinzugsvorrichtung nach Anspruch 24, **dadurch gekennzeichnet, dass** der erste Mitnehmer (42) zu Beginn des Endbereichs der Einzugsbewegung durch die Bewegung des Transportschlittens (6) quer zu dessen translatorischer Bewegung zum Kontaktsatz hin aus dem Bereich des ersten Anschlags (44) heraushebbar ist und dass der zweite Mitnehmer (43) durch die Bewegung des Transportschlittens (6) quer zu dessen translatorischer Bewegung vom Kontaktsatz weg zum Ende des Anfangsbereichs der Ausschubbewegung aus dem Bereich des zweiten Anschlags (45) heraussenkbar ist.

26. Karteneinzugsvorrichtung nach Anspruch 23, **dadurch gekennzeichnet, dass** der Transportschlitten (6) einen dritten Mitnehmer (47) sowie der Schieber (41) einen dritten Anschlag (48) aufweist, wobei der dritte Mitnehmer (47) im Endbereich der Ausschubbewegung des Transportschlittens (6) an dem dritten Anschlag (48) des Schiebers (69), diesen in Ausschubrichtung bis zur Ausfahrposition mitnehmend, anschlagbar ist.

27. Karteneinzugsvorrichtung nach einem der vorhergehenden Ansprüche, **dadurch gekennzeichnet, dass** ein feststehender Endanschlag (46) in den Einzugsweg der Karte ragt, an dem die Karte bei Erreichen der Endeinzugsposition mit ihrer in Einzugsrichtung vorderen Kante in Anlage kommt, wobei der Transportweg des Transportschlittens (6) in Einzugsrichtung länger ist als der Einzugsweg der Karte.

## Claims

1. Card draw-in device, in particular for a tachograph of a motor vehicle, for completely drawing in a card, in particular a chip card, on which a data store is arranged flat, having a transport carriage which has a receiving gap with an insertion opening for receiving the card, into which receiving gap the card can be inserted until it bears against a carriage stop, wherein the transport carriage, while being guided in a shaft of a positionally fixed carrier, can be driven by a drive on a transport path so as to be translationally movable between an extended position and a drawn-in position, and having a fixed contact set against which, in the drawn-in position of the transport carriage, the data store of the card situated at the end of its draw-in path is brought into contacting engagement as a result of the fact that the transport carriage with the card can be moved transversely with respect to its translational movement towards the contact set, **characterized in that** the drive has a reversibly rotatably driveable, positionally fixedly mounted threaded spindle (17) which extends in the direction of extent of the transport path of the transport carriage (6) and on which a spindle nut (25) connected to the transport carriage (6) is arranged.

2. Card draw-in device according to Claim 1, **characterized in that** the drive and the threaded spindle (17) are arranged on the side, which faces away from the insertion opening (33), of a region in which the card is situated in its drawn-in position.

3. Card draw-in device according to one of the preceding claims, **characterized in that** the threaded spindle (17) is rotatably driveable via a worm drive (14).

4. Card draw-in device according to Claim 3, **characterized in that** the threaded spindle (17) is rotatably driveable by the worm drive (14) via an intermediate gear stage (15).

5. Card draw-in device according to one of the preceding claims, **characterized in that** the drive has a motor-operated, in particular an electric motor-operated rotary drive.

6. Card draw-in device according to one of the preceding claims, **characterized in that** the card can be inserted manually into the receiving gap (32) up to a plugged-in position and a starting signal for starting the drive in the draw-in direction can be triggered by the card plugged into the inserted position.

7. Card draw-in device according to one of the preceding claims, **characterized in that** the threaded spindle (17) has at one of its end regions a radially encircling annular groove (19) into which corresponding axial bearing lugs (20) of a positionally fixed axial bearing (21) project.

8. Card draw-in device according to Claim 7, **characterized in that** the axial bearing (21) has two latching arms (22) which can be deflected away from one another transversely with respect to the longitudinal axis of the threaded spindle (17) counter to a spring force and between which the threaded spindle (17) is rotatably mounted by way of a cylindrical region (23) in mutually opposite bearing recesses (24) of the latching arms (22), and on which latching arms the axial bearing lugs (20) are arranged facing one another.

9. Card draw-in device according to one of the preceding claims, **characterized in that** the spindle nut (25) has a driver (28) by means of which the transport carriage (6) is connected to the spindle nut (25).

10. Card draw-in device according to Claim 9, **characterized in that** the spindle nut (25) is guided displaceably on one or more positionally fixed guides in the direction of extent of the transport path of the transport carrier (6).

11. Card draw-in device according to Claim 10, **characterized in that** the spindle nut (25) has on mutually opposite sides guide grooves (26) which extend in the direction of extent of the transport path of the transport carriage (6) and which are directed away from one another and in which there engage corresponding positionally fixed guide tracks (27) which extend in the direction of extent of the transport path of the transport carriage (6).

12. Card draw-in device according to one of Claims 9 to 11, **characterized in that** the transport carriage (6) is connected to the spindle nut (25) at the driver (28) so as to be movable transversely with respect to its receiving surface which receives the card.

13. Card draw-in device according to Claim 12, **characterized in that** the spindle nut (25) has one or more driver pins (29) which project transversely with respect to the receiving surface of the transport carriage (6) and which project into corresponding driving apertures (31) of the transport carriage (6).

14. Card draw-in device according to either of Claims 12 and 13, **characterized in that**, on its transport path between the extended position and the drawn-in position, the transport carriage (6) is guided in positionally fixed guides which extend in their end region which is closer to the drawn-in position from a plane which is further from the contact set into a plane which is close to the contact set.

15. Card draw-in device according to Claim 14, **characterized in that** the guides are guide tracks (10, 10') on which the transport carriage (6) bears by way of guide lugs (9, 9').

16. Card draw-in device according to Claim 15, **characterized in that** the guide tracks (10, 10') merge in a ramp-like manner from the plane which is further from the contact set into the plane which is close to the contact set.

17. Card draw-in device according to one of the preceding claims, **characterized in that** the carrier (1) has an insertion slot (4) through which the card can be guided to the insertion opening (33) of the transport carriage (6) and which, with the card situated in the drawn-in position, can be closed by a closure.

18. Card draw-in device according to Claim 17, **characterized in that** the closure is a closure flap (37) which is reversibly pivotably driveable about a pivot axis which is parallel to the longitudinal extent of the insertion slot (4).

19. Card draw-in device according to Claim 18, **characterized in that** at least one slide (41) is guided on the carrier (1) so as to be movable in the direction of extent of the transport path, which slide can be coupled to the transport carriage (6) and by means of which the closure flap (37) is pivotably driveable.

20. Card draw-in device according to Claim 19, **characterized in that** the closure flap (37) has an excentric which can be acted upon by the slide (41) in the direction of extent of the transport path.

21. Card draw-in device according to Claim 20, **characterized in that** the closure flap (37) has on one or both axial ends a radial lever (38) which has a pivot pin (39) which is parallel to the pivot axis of the closure flap (37) and which engages in an oblong hole (40) of the slide (41) that extends transversely with respect to the plane of the receiving gap (32) of the transport carriage (6).

22. Card draw-in device according to one of Claims 19 to 21, **characterized in that** the slide (41) can be coupled to the transport carriage (6) in the end region of the draw-in movement, before reaching the drawn-in position, and in the starting region and end region of the pushing-out movement of the transport carriage (6).

23. Card draw-in device according to Claim 22, **characterized in that** the transport carriage (6) has drivers (43) which project transversely with respect to the direction of extent of the transport path and which can butt against corresponding stops (44, 45) of the slide (41).

24. Card draw-in device according to Claim 23, **characterized in that** the transport carriage (6) has a first driver (42) and a second driver (43), and the slide (41) has a first stop (44) and a second stop (45), wherein the drivers (42, 43) are arranged so as to project at a distance from one another and the stops (44, 45) are arranged so as to project at a distance from one another, in each case in the direction of extent of the transport path, wherein, in the end region of the draw-in movement, the first driver (42) bears against the first stop (44) of the slide (41) and the second driver (43) is uncoupled from the second stop (45), and wherein, in the starting region of the pushing-out movement of the transport carriage (6), the second driver (43) bears against a second stop (45) and the first driver (42) is uncoupled from the first stop (44) .

25. Card draw-in device according to Claim 24, **characterized in that**, at the start of the end region of the draw-in movement, the first driver (42), through the movement of the transport carriage (6) transversely with respect to its translational movement towards the contact set, can be lifted out of the region of the first stop (44), and **in that**, at the end of the starting region of the pushing-out movement, the second driver (43), through the movement of the transport carriage (6) transversely with respect to its translational movement away from the contact set, can be lowered out of the region of the second stop (45).

26. Card draw-in device according to Claim 23, **characterized in that** the transport carriage (6) has a third driver (47) and the slide (41) has a third stop (48), wherein, in the end region of the pushing-out movement of the transport carriage (6), the third driver (47) can butt against the third stop (48) of the slide (69), driving the latter in the pushing-out direction up to the extended position.

27. Card draw-in device according to one of the preceding claims, **characterized in that** a fixed end stop (46) projects into the draw-in path of the card, against which end stop the card, on reaching the end drawn-in position, bears by way of its edge which is at the front in the draw-in direction, wherein the transport path of the transport carriage (6) in the draw-in direction is longer than the draw-in path of the card.

## Revendications

1. Dispositif d'introduction de carte, notamment pour un tachygraphe d'un véhicule automobile avec introduction complète d'une carte, notamment d'une carte à puce sur la surface de laquelle est disposée une mémoire de données, comprenant un chariot de transport qui possède une fente d'accueil munie d'une ouverture d'introduction destinée à accueillir la carte, dans laquelle la carte peut être introduite jusqu'à reposer contre une butée de chariot, le chariot de transport pouvant être déplacé selon un mouvement de translation en étant guidé dans un compartiment d'un support en position fixe par un mécanisme d'entraînement sur un trajet de transport entre une position de sortie et une position d'introduction, comprenant un jeu de contacts fixe contre lequel, dans la position d'introduction du chariot de transport, la mémoire de données de la carte qui se trouve à la fin de son trajet d'introduction peut être appliquée avec établissement de contact de telle sorte que le chariot de transport pourvu de la carte peut être déplacé transversalement par rapport à son mouvement de translation en direction du jeu de contacts, **caractérisé en ce que** le mécanisme d'entraînement possède une broche filetée (17) pouvant être entraînée en rotation réversible et supportée en position fixe, laquelle s'étend dans le sens de l'extension du trajet de transport du chariot de transport (6) et sur laquelle est disposé un écrou de broche (25) relié avec le chariot de transport (6).

2. Dispositif d'introduction de carte selon la revendication 1, **caractérisé en ce que** le mécanisme d'entraînement et la broche filetée (17) sont disposés sur le côté opposé à l'ouverture d'introduction (33) d'une zone dans laquelle se trouve la carte dans sa position d'introduction.

3. Dispositif d'introduction de carte selon l'une des revendications précédentes, **caractérisé en ce que** la broche filetée (17) peut être entraînée en rotation par le biais d'un mécanisme à vis sans fin (14).

4. Dispositif d'introduction de carte selon la revendication 3, **caractérisé en ce que** la broche filetée (17) peut être entraînée en rotation par le biais d'un rapport de pignon intermédiaire (15) du mécanisme à vis sans fin (14).

5. Dispositif d'introduction de carte selon l'une des revendications précédentes, **caractérisé en ce que** le mécanisme d'entraînement possède un mécanisme d'entraînement en rotation motorisé, notamment électromotorisé.

6. Dispositif d'introduction de carte selon l'une des revendications précédentes, **caractérisé en ce que** la carte peut être introduite manuellement dans la fente d'accueil (32) jusqu'à une position d'insertion et un signal de démarrage servant à démarrer le mécanisme d'entraînement dans la direction de l'introduction peut être déclenché par la carte introduite dans la position d'insertion.

7. Dispositif d'introduction de carte selon l'une des revendications précédentes, **caractérisé en ce que** la broche filetée (17) possède à l'une de ses zones d'extrémité une rainure annulaire (19) circulaire dans le sens radial dans laquelle font saillie les talons de palier axial (20) correspondants d'un palier axial (21) fixe.

8. Dispositif d'introduction de carte selon la revendication 7, **caractérisé en ce que** le palier axial (21) possède deux bras d'encliquetage (22) qui peuvent être écartés l'un de l'autre transversalement à l'axe longitudinal de la broche filetée (17) en s'opposant à la force d'un ressort, entre lesquels la broche filetée (17) est montée rotative avec une zone cylindrique (23) dans des logements de palier (24) mutuellement opposés des bras d'encliquetage (22) et au niveau desquels sont disposés les talons de palier axial (20) en se faisant mutuellement face.

9. Dispositif d'introduction de carte selon l'une des revendications précédentes, **caractérisé en ce que** l'écrou de broche (25) possède un élément d'entraînement (28) au moyen duquel le chariot de transport (6) est relié à l'écrou de broche (25).

10. Dispositif d'introduction de carte selon la revendication 9, **caractérisé en ce que** l'écrou de broche (25) est guidé de manière coulissante au niveau d'un ou plusieurs guides fixes dans le sens de l'extension du trajet de transport du chariot de transport (6).

11. Dispositif d'introduction de carte selon la revendication 10, **caractérisé en ce que** l'écrou de broche (25) possède sur des côtés mutuellement opposés des rainures de guidage (26) qui s'étendent dans le sens de l'extension du trajet de transport du chariot de transport (6) et qui sont dirigées à l'opposé l'une de l'autre et dans lesquelles viennent en prise des pistes de guidage (27) fixes correspondantes, lesquelles s'étendent dans le sens de l'extension du trajet de transport du chariot de transport (6) .

12. Dispositif d'introduction de carte selon l'une des revendications 9 à 11, **caractérisé en ce que** le chariot de transport (6), au niveau de l'élément d'entraînement (28), est relié de manière mobile avec l'écrou de broche (25) transversalement à sa surface d'accueil qui accueille la carte.

13. Dispositif d'introduction de carte selon la revendication 12, **caractérisé en ce que** l'écrou de broche (25) possède un ou plusieurs tenons d'entraînement (29) qui font saillie transversalement par rapport à la surface d'accueil du chariot de transport (6), lesquels font saillie dans des cavités d'entraînement (31) correspondantes du chariot de transport (6).

14. Dispositif d'introduction de carte selon l'une des revendications 12 et 13, **caractérisé en ce que** le chariot de transport (6), sur son trajet de transport entre la position de sortie et la position d'introduction, est guidé dans des guides fixes qui, dans leur zone d'extrémité la plus proche de la position d'introduction, s'étendent d'un plan plus éloigné du jeu de contacts dans un plan plus proche du jeu de contacts.

15. Dispositif d'introduction de carte selon la revendication 14, **caractérisé en ce que** les guides sont des pistes de guidage (10, 10') sur lesquelles le chariot de transport (6) repose avec des talons de guidage (9, 9').

16. Dispositif d'introduction de carte selon la revendication 15, **caractérisé en ce que** les pistes de guidage (10, 10') passent du plan le plus éloigné du jeu de contacts au plan proche du jeu de contacts sous la forme d'une rampe.

17. Dispositif d'introduction de carte selon l'une des revendications précédentes, **caractérisé en ce que** le support (1) possède une fente d'introduction (4) à travers laquelle peut être passée la carte en direction de l'ouverture d'insertion (33) du chariot de transport (6) et qui peut être fermée par un fermoir lorsque la carte se trouve dans la position d'introduction.

18. Dispositif d'introduction de carte selon la revendication 17, **caractérisé en ce que** le fermoir est un clapet de fermeture (37) pouvant être entraîné en pivotement réversible autour d'un axe de pivotement parallèle à l'extension longitudinale de la fente d'insertion (4).

19. Dispositif d'introduction de carte selon la revendication 18, **caractérisé en ce qu'**au moins un curseur (41) est guidé en mobilité sur le support (1) dans le sens de l'extension du trajet de transport, lequel peut être accouplé au chariot de transport (6) et par lequel le clapet de fermeture (37) peut être entraîné en pivotement.

20. Dispositif d'introduction de carte selon la revendication 19, **caractérisé en ce que** le clapet de fermeture (37) possède un excentrique qui peut être sollicité par le curseur (41) dans le sens de l'extension du trajet de transport.

21. Dispositif d'introduction de carte selon la revendication 20, **caractérisé en ce que** le clapet de fermeture (37) possède, au niveau d'une ou des deux extrémités axiales, un levier radial (38), lequel possède un tenon de pivotement (39) parallèle à l'axe de pivotement du clapet de fermeture (37), lequel vient en prise dans un trou oblong (40) du curseur (41) qui s'étend transversalement au plan de la fente d'accueil (32) du chariot de transport (6).

22. Dispositif d'introduction de carte selon l'une des revendications 19 à 21, **caractérisé en ce que** le curseur (41) peut être accouplé avec le chariot de transport (6) dans la zone d'extrémité du mouvement d'introduction avant d'atteindre la position d'introduction ainsi que dans la zone de début et la zone de fin du mouvement d'éjection du chariot de transport (6) .

23. Dispositif d'introduction de carte selon la revendication 22, **caractérisé en ce que** le chariot de transport (6) possède des éléments d'entraînement (43) qui font saillie transversalement au sens de l'extension du trajet de transport, lesquels peuvent être accrochés à des butées (44, 45) correspondantes du curseur (41).

24. Dispositif d'introduction de carte selon la revendication 23, **caractérisé en ce que** le chariot de transport (6) possède un premier élément d'entraînement (42) et un deuxième élément d'entraînement (43) et le curseur (41) possède une première butée (44) et une deuxième butée (45), les éléments d'entraînement (42, 43) l'un par rapport à l'autre et les butées (44, 45) l'une par rapport à l'autre étant respectivement disposés en saillie avec un espacement dans le sens de l'extension du trajet de transport, le premier élément d'entraînement (42) étant appliqué contre la première butée (44) du curseur (41) et le deuxième élément d'entraînement (43) désaccouplé de la deuxième butée (45) dans la zone finale du mouvement d'introduction et, dans la zone de début du mouvement d'éjection du chariot de transport (6), le deuxième élément d'entraînement (43) étant appliqué contre la deuxième butée (45) et le premier élément d'entraînement (42) désaccouplé de la première butée (44).

25. Dispositif d'introduction de carte selon la revendication 24, **caractérisé en ce que** le premier élément d'entraînement (42), au début de la zone finale du mouvement d'introduction, peut être soulevé hors de la zone de la première butée (44) par le mouvement du chariot de transport (6) transversalement à son mouvement de translation en direction du jeu de contacts, et **en ce que** le deuxième élément d'entraînement (43) peut être hissé hors de la zone de la deuxième butée (45) par le mouvement du chariot de transport (6) transversalement à son mouvement de translation d'éloignement du jeu de contacts vers l'extrémité de la zone de début du mouvement d'éjection.

26. Dispositif d'introduction de carte selon la revendication 23, **caractérisé en ce que** le chariot de transport (6) possède un troisième élément d'entraînement (47) et le curseur (41) possède une troisième butée (48), le troisième élément d'entraînement (47) pouvant, dans la zone finale du mouvement d'éjection du chariot de transport (6), être attaché à la troisième butée (48) du curseur (69), entraînant celui-ci dans le sens de l'éjection jusqu'à la position de sortie.

27. Dispositif d'introduction de carte selon l'une des revendications précédentes, **caractérisé en ce qu'**une première butée finale fixe (46) fait saillie dans le trajet d'introduction de la carte, contre laquelle la carte vient en butée avec son bord avant dans le sens de l'introduction, le trajet de transport du chariot de transport (6) dans le sens de l'introduction étant plus long que le trajet d'introduction de la carte.
